# EUROPEAN PATENT SPECIFICATION

(11) **EP 0 857 265 B1**
(45) Date of publication and mention of the grant of the patent: **05.03.2003**
(21) Application number: 96936050.2
(22) Date of filing: 27.09.1996
(51) Int. Cl.: F16F 1/00, F16F 9/00

(54) **APPARATUS AND METHOD FOR REDUCING SHOCKS IN A LINE**
VORRICHTUNG UND VERFAHREN ZUR REDUZIERUNG VON STOSSEN IN EINER LINIE
AMORTISSEUR ATTENUANT LES CHOCS DANS UNE LIGNE ET PROCEDE CORRESPONDANT

(30) Priority: 06.09.1996 US 708266
(43) Date of publication of application: 12.08.1998
(73) Proprietor: Gilmore, Peter, Boston, MA 02115 (US)
(72) Inventor: Gilmore, Peter, Boston, MA 02115 (US)
(74) Representative: Jones, Graham H.
(86) International application number: US9615590
(87) International publication number: WO98010204

(56) References cited:
- US-A- 1 690 957
- US-A- 3 931 656
- US-A- 4 681 303
- US-A- 4 817 551
- US-A- 4 864 956
- US-A- 4 955 309
- US-A- 4 992 629

## Description

### FIELD OF THE INVENTION

This invention relates generally to an apparatus for reducing shocks in a line connected between two objects, and more particularly concerns an apparatus that is adaptable for use in a multitude of applications such as boat mooring, water skiing, boat towing, aircraft tie down lines and rescue lines.

### BACKGROUND OF THE INVENTION

The problem of shock absorption between two objects connected by a line has plagued industries such as boating and aviation for many years. Line herein is used to encompass marine line, rope, chain, cable and other similar material for securing two objects together. Shocks, jerks, surges and other such occurrences create many problems such as line chaffing, as well as excessive bouncing and rolling of a boat, aircraft or other object. These problems can result in substantial damage to the boat, aircraft or other object, it also creates a safety hazard to people on or near the boat, aircraft and/or other object.

There have been various attempts in the prior art to reduce the shock in a line and thus eliminate the resultant problems. U.S. Patent No. 4,681,303 to Grassano discloses a shock absorbent connector for use with vehicle tow lines, tie down lines for aircraft, mooring lines for boats, and the like. The disclosed connector uses an internal spring that is compressed by a piston as force is applied to one end of the spring. The connector however, is merely a shock absorbing connector and not a device for application directly to one individual line. The disclosure requires two separate lines to utilize the device. This requirement creates additional costs for using the device and it inconveniences the user. Furthermore, the amount of compression force applied to the connector is virtually unlimited thus increasing the likelihood that the device will break. If the disclosed connector should consequently break, the two lines would no longer be connected, thus creating a variety of dangerous situations, especially when mooring a boat, pulling a water-skier, securing an aircraft or operating rescue apparatus.

U.S. Patent No. 4,864,956 to Oustwedder discloses a yieldable mooring line for a boat, Such a line fully exposes the disclosed springs to marine growth such as barnacles, mussels, and the like, that can substantially impair the effectiveness of the line. The disclosure also suffers the same problems as Grassano in that it requires at least two separate lines to make one connection across the springs.

U.S. Patent No. 4,955,309 to Ciccone discloses a yieldable line assembly and in line shock absorber. Similar to Grassano, this reference discloses a plunger that compresses a spring in response to compression force from a line, A second end of the device is serially connected to another line. Because of the design, Ciccone thus suffers from the same problems as those noted with Gaassano and Oustwedder

U.S. Patent No. 4,992,629 to Morais discloses an in-line shock absorbing device comprising a housing with at least two ends, and a resilient member within the housing, whereby the shock absorbing device is coupled to a line by line-receiving means for incorporating the shock absorbing device into the line.

A further problem encountered with the prior art is the need to tie the line to the shock absorbing device. Because of the high amount of tension put on the line and knots by the environments in which they are used, the line must be cut to remove the shock absorbing device from the line.

There have been other attempts in the prior art to solve the same problems addressed by the above noted references. Many of those other attempts, however, have been characterized as being highly corrosive, having unduly complicated and costly designs, being unreliable and consequently dangerous, and being unable to adapt to varying degrees of stress in a line and the elements.

Accordingly there is a great need for a device and method that will absorb shocks in a single line connected between two objects, without the need for tying knots, where the device has a simple design which consequently is inexpensive to manufacture and is characterized by its functional and structural reliability.

### SUMMARY OF INVENTION

It is therefore an object of this invention to provide an apparatus for reducing and/or absorbing the shocks in a line connecting two objects.

It is another object of this invention to provide an apparatus for reducing line chaffing and excessive bouncing of an object that is connected to another object by a line.

It is another object of this invention to provide an apparatus for reducing the shocks in a line that is simple and inexpensive to manufacture and implement.

It is another object of this invention to provide an apparatus for reducing shocks in a line that is structurally strong, versatile in its load potentials, will not corrode too rapidly, is not exposed to substantial marine growth in its use and is characterized by its reliability.

It is another object of this invention to provide an apparatus for reducing shocks in a line that is adapted specifically to be utilized on a single line.

It is another object of this invention to provide an apparatus for reducing shocks in a line that is able to be adapted to be used for a variety of applications including but not limited to: mooring a boat; towing a boat; pulling a water-skier; tying down an aircraft; and using rescue lines.

It is another object of this invention to provide an apparatus for reducing shocks in a line that increases the personal safety of people on a boat or other objects that may be connected by that line.

It is another object of this invention to provide an apparatus for reducing shocks in a line which may be incorporated into a line without the need for tying knots in the line.

This invention results from the realization that a resilient spring can be fastened to two points on a single line connected between two objects and thus provide a reliable and simple shock absorption function. The points at which the line is fastened are formed with flexible cables which also couple the resilient spring to the line. The resilient spring is contained within a housing to prevent substantial marine growth from forming on the spring, thus increasing the reliability and longevity of such an apparatus.

The above and other objects are achieved in accordance with the present invention as defined in claim 1.

### BRIEF DESCRIPTION OF THE DRAWINGS

Other object and advantages of this invention will occur to those skilled in the art from the following description of a preferred embodiment and the accompanying drawings in which:
Fig. 1 is a side view, in partial cross section, of a preferred embodiment of the apparatus of this invention;
Fig. 2 is a side view, in partial cross section, of the apparatus of Fig. 1 with a preferred embodiment of the restriction tube of this invention;
Fig. 3 illustrates a method of using the apparatus of this invention in conjunction with a boat and water-skier;
Fig. 4 illustrates a method of using the apparatus of this invention in conjunction with a boat and a dock;
Fig. 5 illustrates a method of using the apparatus of this invention in conjunction with two boats;
Fig. 6 illustrates a method of using the apparatus of this invention in conjunction with rescue lines;
Fig. 7 illustrates a method of using the apparatus of this invention in conjunction with an aircraft;
Fig. 8 is a view of an alternative end design to the restriction tube apparatus of this invention;
Fig. 9 is a side view, in partial cross section, of an alternative preferred embodiment of the apparatus of this invention;
Fig. 10 is a partial side view depicting an alternative stop means for the apparatus of this invention; and
Fig. 11 is an end view of the apparatus shown in Fig. 10.

### DETAILED DESCRIPTION OF THE PREFERRED EMBODIMENT

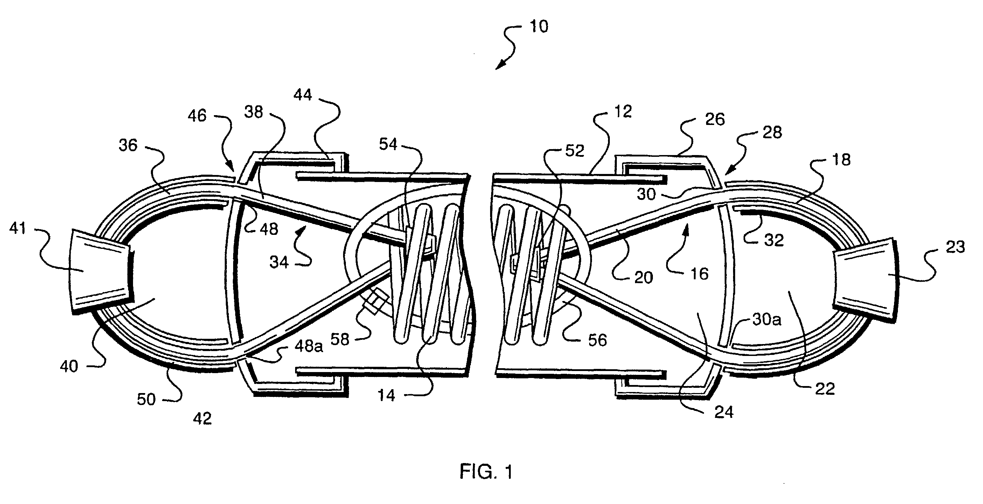

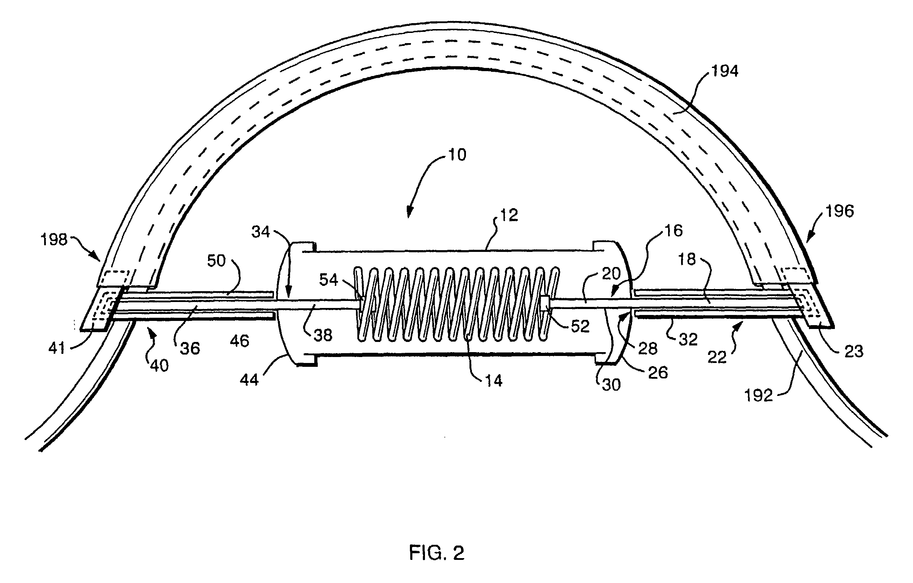

Figs. 1 and 2 show a detailed view in partial cross section of a preferred embodiment of an apparatus for reducing shocks in a line according to this invention, hereinafter referred to as the shock absorber 10. The shock absorber 10 comprises an external housing 12 inside of which is a spring 14. Positioned at the first end of the housing 12 is a first end cap 26 through which passes a first flexible cable 16. The first flexible cable 16 passes through a first hole 30 in the first end cap 26, has a portion 18 located outside the housing 12, then passes back into the housing 12 through a second hole 30a in the first end cap 26. The first flexible cable 16 then loops around the first end of the spring 14 to couple the first end of the spring 14 to the first flexible cable 16. The ends of the first flexible cable 16 are secured together with a coupling 52 such that the first flexible cable 16 forms a continuous loop with a portion 20 located inside the housing 12 and a portion 18 located outside of the housing 12. The coupling 52 may be a coupling, crimp or other like securing apparatus. The ends of the first flexible cable 16 and the coupling 52 form a V around the spring 14, preventing bending of the first flexible cable 16 at the point it is secured to the spring 14. A further advantage of the V shape is that it reduces the friction between the first flexible cable 16 and the spring 14. The outside portion 18 of the first flexible cable 16 is surrounded by a first flexible sheath 32. The combination of the first flexible sheath 32 and the holes 30 and 30a through the first end cap 26, create a first stop element 28 as the outside diameter of the first flexible sheath 32 is wider than the diameter of the holes 30 and 30a in the first end cap 26. The first stop element 28 thus prevents the outside portion 18 of the first flexible cable 16 from being pulled inside the housing 12 by the spring 14. The outside portion 18 of the first flexible cable 16 surrounded by the sheath 32 defines an opening referred to as a first receiving loop 22. At the distal end of the first receiving loop 22 is a first gripping member 23 which surrounds both the first flexible sheath 32 and the outside portion of the first flexible cable 18. The inside portion 20 of the first flexible cable 16 defines an opening referred to as a first securing loop 24.

Positioned at the second end of the housing 12 is a second end cap 44 through which passes a second flexible cable 34. The second flexible cable 34 passes through a first hole 48 in the second end cap 44, has a portion 36 located outside the housing 12, then passes back into the housing 12 through a second hole 48a in the second end cap 44. The second flexible cable 34 then loops around the second end of the spring 14 to couple the second end of the spring 14 to the second flexible cable 34. The ends of the second flexible cable 34 are secured together with a coupling 54 such that the second flexible cable 34 forms a continuous loop with a portion 38 located inside the housing 12 and a portion 36 located outside of the housing 12. The ends of the second flexible cable 34 and the coupling 54 form a V around the spring 14, preventing bending of the second flexible cable 34 at the point it is secured to the spring 14. A further advantage of the V shape is that it reduces the friction between the second flexible cable 34 and the spring 14. The coupling 54 may be a coupling, crimp or other like securing apparatus. The outside portion 36 of the second flexible cable 34 is surrounded by a second flexible sheath 50. The combination of the second flexible sheath 50 and the holes 48 and 48a through the second end cap 44, create a second stop element 46 as the outside diameter of the second flexible sheath 50 is wider than the diameter of the holes 48 and 48a in the second end cap 44. The second stop element 46 thus prevents the outside portion 36 of the second flexible cable 34 from being pulled inside the housing 12 by the spring 14. The outside portion 36 of the second flexible cable 34, surrounded by the second flexible sheath 50, defines an opening referred to as a second receiving loop 40. At the distal end of the second receiving loop 40 is a second gripping member 41 which surrounds both the second flexible sheath 50 and the outside portion of the second flexible cable 34. The inside portion 38 of the second flexible cable 34 defines an opening referred to as a second securing loop 42.

Located inside the housing 12 is a securing cable 56 which passes through the first securing loop 24, around the spring 14 and through the second securing loop 42. The ends of the securing cable 56 are secured with a coupling 58 such that the securing cable 56 forms one continuous loop. The purpose of the securing cable 56 is to limit the distance which the spring 14 is allowed to stretch.

Fig. 2 shows the shock absorbing device 10 of Fig. 1 in conjunction with a line 192 and a restriction tube 194. The line 192 in which the shock absorber 10 will be incorporated is passed through the first receiving loop 22, then through the restriction tube 194, and finally back through the second receiving loop 40. The first end 196 of the restriction tube 194 is cut at an angle to allow it to rest flat against the first flexible sheath 32 around the first receiving loop 22. The first end 196 of the restriction tube 194 rests over the first gripping member 23. This allows the restriction tube 194 to rest securely on the first receiving loop 22. The second end 198 of the restriction tube 194 is cut at an angle to allow it to rest flat against the second flexible sheath 50 around the second receiving loop 40. The second end 198 of the restriction tube 194 rests over the second gripping member 41. This allows the restriction tube 194 to rest securely on the second receiving loop 40. The use of the restriction tube 194 allows for the incorporation of the shock absorber 10 into the line 192 without the need for tying knots to the first 22 and second 40 receiving loops. A further advantage of the restriction tube 194 is that it allows for a predetermined amount of slack in the line 192 to be positioned between the first 22 and second 40 receiving loops, thereby limiting the maximum extension which the shock absorber 10 will be allowed to perform.

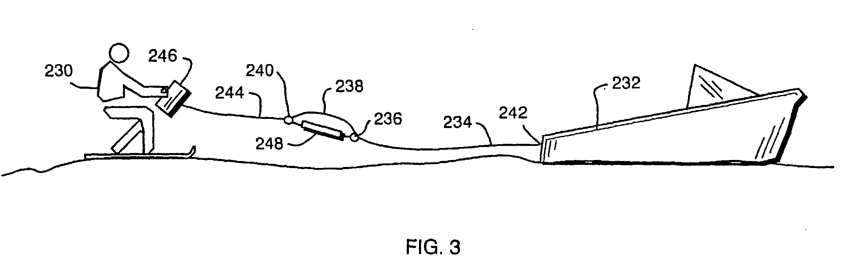

Figs. 3, 4, 5, 6 and 7 are illustrative of several methods for using the apparatus of the present invention. Fig. 3 shows a water-skier 230 being pulled by a boat 232 with a line 234 connected therebetween. The line 234 passes through the first receiving loop 236, then through the restriction tube 238 and finally back through the second receiving loop 240. The first end 242 of the line 234 is secured to the boat 232 while the other end 244 is secured to a device 246 for the water skier 230 to grasp. The shock absorber 248 is thereby secured between the boat 232 and the water-skier 230 and reduces the severity of the shocks in the line 234.

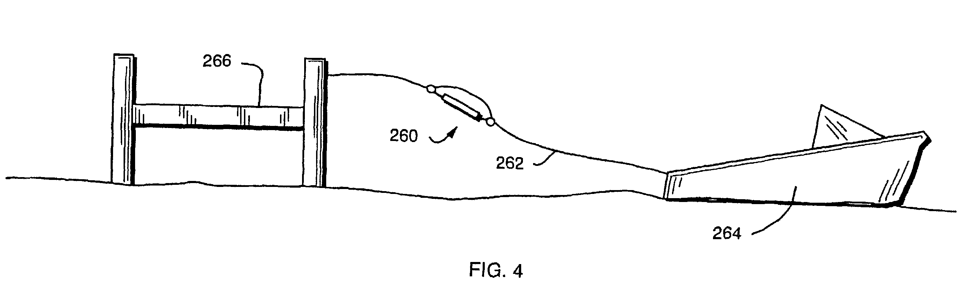

Fig. 4 similarly illustrates another method and use of the shock absorber 260 of this invention in conjunction with a line 262. In this configuration a boat 264 is secured to a dock 266 with a line 262 connected therebetween. The shock absorber 260 is incorporated into the line 262 in similar fashion as has been described above. The use of the shock absorber 260 in this environment reduces the stress placed on the line 262, boat 264 and the dock 266 created by wind, waves and other like occurrences.

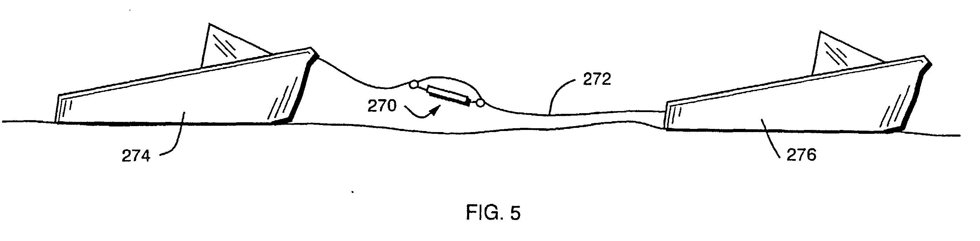

Fig. 5 shows another use of the of the shock absorber 270 of this invention in conjunction with a line 272. In this use a boat 276 is towing another boat 274 with a line 272 connected therebetween. The shock absorber 270 may be incorporated into the line 272 in similar fashion as has been described above.

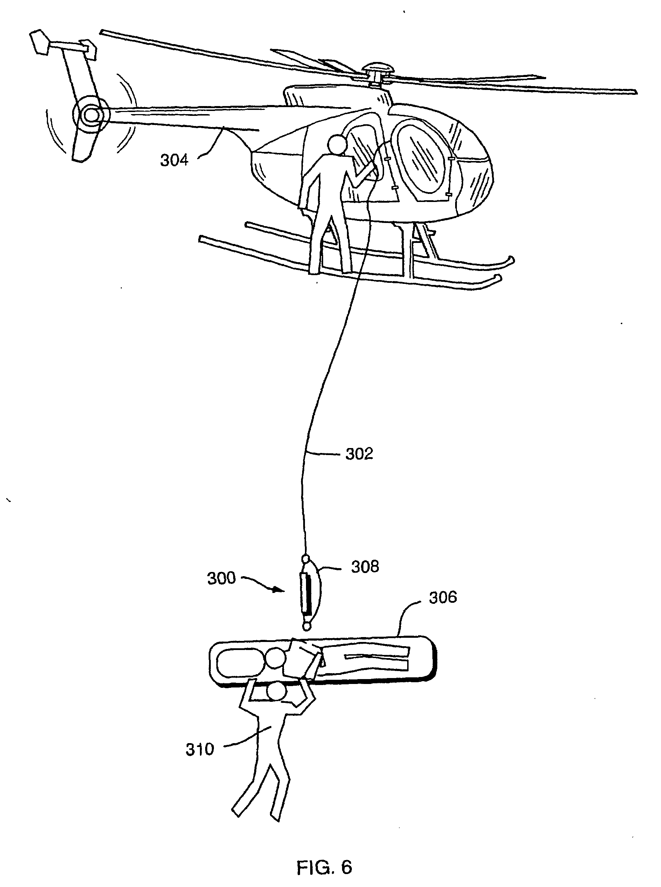

Fig. 6 shows another use of the shock absorber 280 of this invention in conjunction with a tie down line 282. In this use an aircraft 284 is secured with a tie down line 282. This figure displays an alternative means of incorporating the shock absorber 280 into the tie down line 282. In this configuration the tie down line 282 is tied to the first receiving loop 286 and the second receiving loop 288. The portion 290 of the tie down line 282 which is located between the first receiving loop 286 and the second receiving loop 288 has some slack in it. The purpose of the slack is to allow the shock absorber 280 to expand in size to absorb the shock in the tie down line 282.

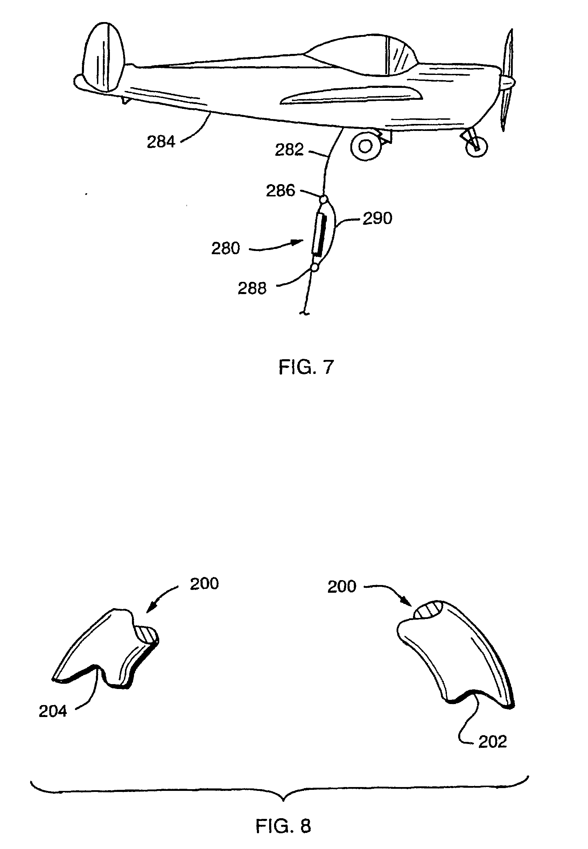

Fig. 7 shows another use of the shock absorber 300 of this invention in conjunction with a rescue line 302, a helicopter 304 and a rescue basket 306. In this configuration, the rescue basket 306 is may be held steady by a rescuer 310, while the helicopter 304 is making movements caused by the wind or other like occurrences. The shock absorber 300 is incorporated into the rescue line with the use of a restriction tube 308 as described above. The restriction tube 308 ensures the integrity of the rescue line 302 in the event the shock absorber 300 should break.

Fig. 8 shows an alternative design of the restriction tube 200 of this invention, in which a first notch 202 has been cut out of the first end of the restriction tube 200 and a second notch 204 has been cut out of the second end of the restriction tube 200. The purpose of the first notch 202 and second notch 204 is to allow the restriction tube 200 to securely grip the aforementioned line receiving means.

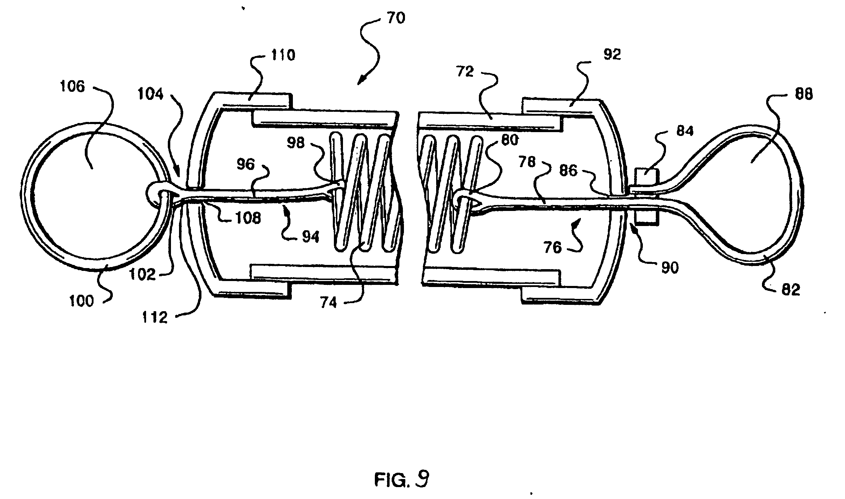

Figs. 9 through 11 show alternative preferred embodiments of the apparatus of this invention. Fig. 9 shows an alternative preferred embodiment of this invention in which the shock absorber 70 comprises a housing 72 inside of which is a spring 74. At the first end to the housing 72 is a first flexible cable 76 which has an inside portion 78 secured to the spring 74 by a coupling mechanism 80. The first flexible cable 76 passes through a hole 86 in a first end cap 92 positioned at the first end of the housing 72, thereby having a portion 82 of the first flexible cable 76 outside of the housing 72. The outside portion 82 of the first flexible cable 76 loops around and is secured to itself by a coupling mechanism 84. The outside portion 82 of the first flexible cable 76 thus defines a first receiving loop 88. The combination of the first end cap 92, the hole through the first end cap 86 and the coupling mechanism 84 form a first stop element 90 to prevent the outside portion 82 of the first flexible cable 76 from being pulled back into the housing 72 by the spring 74. At the second end to the housing 72 is a second flexible cable 94 which has an inside portion 96 secured to the spring 74 by a coupling mechanism 98. The second flexible cable 94 passes through a hole 108 in a second end cap 110 positioned at the second end of the housing 72, thereby having a portion 112 of the second flexible cable 94 outside of the housing 72. At the distal end of the outside portion 112 of the second flexible cable 94 is a means of coupling 102 a line receiving element 100 to the second flexible cable 94. The line receiving element 100 defines a second receiving loop 106. The combination of the second end cap 110, the hole through the second end cap 108 and the coupling mechanism 102 form a second stop element 104 to prevent the outside portion 112 of the second flexible cable 94 and the line receiving element 110 from being pulled back into the housing 72 by the spring 74.

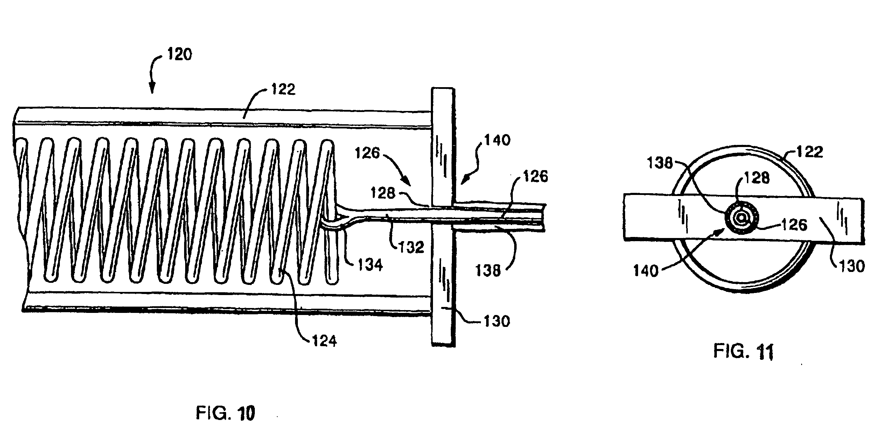

Figs. 10 and 11 show an alternative embodiment of the shock absorber 120 of this invention. The shock absorber 120 comprises a housing 122 inside of which is a spring 124. Located at the end of the housing 122 is a flexible cable 126 which has a portion 132 inside the housing 122 and a portion 136 outside the housing 122. The portion 132 inside the housing 122 has a means of coupling 134 the flexible cable 126 to the spring 124. The flexible cable 126 passes through a hole 128 in an end plate 130 positioned at the end of the housing 122, the flexible cable 126 then continues outside of the housing thereby having a portion 136 outside of the housing 122. The end plate 130 must be sufficiently long to allow its ends to rest against the outside edges of the housing 122. The outside portion 136 of the flexible cable 126 is surrounded by a flexible sheath 138. One of the aforementioned line receiving means shall be positioned at the distal end of the flexible cable 126. The flexible sheath 136, end plate 130 and the hole through the end plate 128 form a stop element 140 to prevent the outside portion 136 of the flexible cable 126 from being pulled back into the housing 122 by the spring 124.

## Claims

1. An in-line shock absorbing device (10), comprising a housing (12) with at least two ends; a resilient member (14) within said housing (12); whereby the shock absorbing device is coupled to a line (192) by line-receiving means for incorporating said shock absorbing device into the line (192), **characterized by**:
a first flexible cable (16) coupled to a first end of said resilient member (14) and passing outside of said housing (12);
a second flexible cable (34) coupled to a second end of said resilient member (14) and passing outside of said housing (12);
a first line-receiving means (22) at the distal end (18) of said first flexible cable (16), outside of the first end of said housing (12), for incorporating the first end of said shock absorbing device (10) into said line (192) in which said shock absorbing device will be used;
a second line-receiving means (40) at the distal end (36) of said second flexible cable (34), outside of the second end of said housing (12), for incorporating the second end of said shock absorbing device (10) into said line (192) in which said shock absorbing device will be used;
a first stop element (28) at said first end of said housing (12) defining an opening for said first flexible cable to pass through and prevent said first line-receiving means (22) from being pulled into said housing (12) by said resilient member (14);
a second stop element (46) at said second end of said housing (12) defining an opening for said second flexible cable to pass through and prevent said second line-receiving means (40) from being pulled into said housing (12) by said resilient member (14);
whereby said shock absorbing device (10) is coupled to said line (192) by said line-receiving means (22, 40)for incorporating said shock absorbing device (10) into the line (192) to provide shock absorption to the line.

2. The shock absorbing device of claim 1 in which said stop element (28, 46) at each end of said housing is an end cap (26, 44).

3. The shock absorbing device according to any preceding claim in which said resilient member (14) is a spring.

4. The shock absorbing device according to any preceding claim in which:
said first stop element (28) includes a first sheath (32) around said first flexible cable (16) outside of said first end of said housing (12); and
said second stop element (46) includes a second sheath (50) around said second flexible cable (34) outside of said second end of said housing (12).

5. The shock absorbing device according to claim 4 in which:
said first sheath (32) surrounds the entire portion (18) of said first flexible cable (16) which is outside of said housing (12); and
said second sheath (50) surrounds the entire portion (36) of said second flexible cable (34) which is outside of said housing (12).

6. The shock absorbing device according to any preceding claim in which:
said first flexible cable (16) is secured to itself outside of said housing (12) and said first stop element (28), to form said first line-receiving means (22); and
said second flexible cable (34) is secured to itself outside of said housing (12) and said second stop element (46) to form said second line-receiving means (40).

7. The shock absorbing device according to any preceding claim in which:
said first line-receiving means (22) is a line receiving element, coupled to the distal end of said first flexible cable (16), defining an aperture (22) for the line to pass through; and
said second line-receiving means (40) is a line receiving element, coupled to the distal end of said second flexible cable (34), defining an aperture (40) for the line to pass through.

8. The shock absorbing device according to any preceding claim in which:
there are two holes through said first stop element (28) and two holes through said second stop element (46).
said first flexible cable (16) passes back through said second hole of said first stop element (28) thereby:
forming a first receiving loop (18) outside said housing (12);
forming a first securing loop (20) inside said housing (12), and
coupling said resilient member (14) to said first securing loop (20);
said second flexible cable (34) passes back through said second hole of said second stop element (46) thereby:
forming a second receiving loop (36) outside said housing (12);
forming a second securing loop (38) inside said housing (12); and
coupling said resilient member (14) to said second securing loop (38);
whereby said first and second receiving loops (18, 36) are said line-receiving means for incorporating said shock absorbing device (10) into the line (192).

9. The shock absorbing device according to any preceding claim further including a restraining loop (56) passing through said first securing loop (20) and passing through said second securing loop (38) to limit the extension of said resilient member (14).

10. The shock absorbing device according to any preceding claim further including:
a restriction tube (194) comprising a hollow flexible tube approximately slightly shorter than the distance between said first line-receiving means (22) and said second line-receiving means (40) when said resilient member (14) is approximately fully extended;
whereby said line (192):
passes through said first line-receiving means (22) then passes through said restriction tube (194); and then passes through said second line-receiving means (40);
thereby obviating the need for tying knots in said line (192) to incorporate said shock absorbing device (10) into said line (192), and also providing for a predetermined amount of slack in said line (192) between said first line-receiving means (22) and said second line-receiving means (40) to limit the amount of extension said resilient member (14) will be allowed to perform.

11. The shock absorbing device according to claim 10 in which:
the first end of said restriction tube (194) is cut at about a 15 to 75 degree angle, to allow said restriction tube (194) to rest approximately flat against said line receiving means (22, 40) thereby providing a more preferable surface to grip said line receiving means (22, 40);
the second end of said restriction tube (194) is cut at about a 15 to 75 degree angle, to allow said restziction tube (194) to rest approximately flat against said line receiving means (22, 40) thereby providing a more preferable surface to grip said line receiving means (22, 40);
said first sheath (32) has an expanded portion at the distal end of said first line-receiving means (22) to provide a more preferable surface for resting against said first end of said restriction tube (194); and
said second sheath (50) has an expanded portion at the distal end of said second line-receiving means (40) to provide a more preferable surface for resting against said second end of said restriction tube (194).

## Patentansprüche

1. Eine stoßdämpfende Vorrichtung (10) innerhalb einer Leine, aufweisend ein Gehäuse (12) mit mindestens zwei Enden; ein elastisches Glied (14) innerhalb besagten Gehäuses (12); wodurch die stoßdämpfende Vorrichtung an eine Leine (192) durch leinen-aufnehmende Einrichtungen verbunden ist um besagte stoßdämpfende Vorrichtung in die Leine (192) zu integrieren, **gekennzeichnet durch**:
ein erstes flexibles Seil (16), das an ein erstes Ende besagten elastischen Gliedes (14) verbunden ist und aus besagtem Gehäuse (12) nach außen geht;
ein zweites flexibles Seil (34), das an ein zweites Ende besagten elastischen Gliedes (14) verbunden ist und aus besagtem Gehäuse (12) nach außen geht;
erste leinen-aufnehmende Einrichtungen (22) am entfernten Ende (18) besagten ersten flexiblen Seils (16), außerhalb des ersten Endes besagten Gehäuses (12) um das erste Ende besagter stoßdämpfender Vorrichtung (10) in besagte Leine (192), in der besagte stoßdämpfende Vorrichtung benutzt werden wird, zu integrieren;
zweite leinen-aufnehmende Einrichtungen (40) am entfernten Ende (36) besagten zweite flexiblen Seils (16), außerhalb des zweiten Endes besagten Gehäuses (12) um das zweiten Ende besagter stoßdämpfender Vorrichtung (10) in besagte Leine (192), in der besagte stoßdämpfende Vorrichtung benutzt werden wird;
ein erstes Anschlagelement (28) in besagtem ersten Ende besagten Gehäuses (12), das eine Öffnung zum Hindurchgehen für besagtes erstes flexibles Seil begrenzt und
besagte erste leinen-aufnehmende Einrichtungen (22) daran hindert, in besagtes Gehäuse (12) **durch** besagtes elastisches Glied (14) gezogen zu werden;
ein zweites Anschlagelement (46) in besagtem zweiten Ende besagten Gehäuses (12), das eine Öffnung zum Hindurchgehen für besagtes zweites flexibles Seil begrenzt und besagte zweite leinen-aufnehmenden Einrichtungen (40) daran hindert, in besagtes Gehäuse (12) **durch** besagtes elastisches Glied (14) gezogen zu werden;
wodurch besagte stoßdämpfende Vorrichtung (10) an besagte Leine (192) **durch** besagte leinen-aufnehmenden Einrichtungen (22, 40) an besagte Leine (192) verbunden ist, um besagte stoßdämpfende Vorrichtung (10) in die Leine (192) zu integrieren, um Stoßdämpfung für die Leine zu schaffen.

2. Die stoßdämpfende Vorrichtung des Anspruchs 1, bei der besagtes Anschlagelement (28, 46) an jedem Ende besagten Gehäuses eine Abschlußkappe (26, 44) ist.

3. Die stoßdämpfende Vorrichtung nach irgendeinem vorhergehenden Anspruch, bei der besagtes elastisches Glied (14) eine Feder ist.

4. Die stoßdämpfende Vorrichtung nach irgendeinem vorhergehenden Anspruch, bei der:
besagtes erstes Anschlagelement (28) eine erste Hülle (32) um besagtes erstes flexibles Seil (16) außerhalb besagten ersten Endes besagten Gehäuses (12) aufweist; und
besagtes zweites Anschlagelement (46) eine zweite Hülle (50) um besagtes zweites flexibles Seil (34) außerhalb besagten zweiten Endes besagten Gehäuses (12) aufweist.

5. Die stoßdämpfende Vorrichtung nach Anspruch 4, bei der:
besagte erste Hülle (32) den ganzen Teil (18) besagten ersten flexiblen Seils (16), der sich außerhalb besagten Gehäuses (12) befindet, umgibt; und
besagte zweite Hülle (50) den ganzen Teil (36) besagten zweiten flexiblen Seils (34), der sich außerhalb besagten Gehäuses (12) befindet, umgibt.

6. Die stoßdämpfende Vorrichtung nach irgendeinem vorhergehenden Anspruch, bei der:
besagtes erstes flexibles Seil (16) außerhalb besagten Gehäuses (12) und besagten ersten Anschlagelementes (28) an sich selbst befestigt ist, um besagte erste leinen-aufnehmenden Einrichtungen (22) zu bilden; und
besagtes zweites flexibles Seil (34) außerhalb besagten Gehäuses (12) und besagten zweiten Anschlagelementes (46) an sich selbst befestigt ist, um besagte zweite leinen-aufnehmenden Einrichtungen (40) zu bilden.

7. Die stoßdämpfende Vorrichtung nach irgendeinem vorhergehenden Anspruch, bei der besagte erste leinen-aufnehmenden Einrichtungen (22) ein leinen-aufnehmendes Element sind, das an das entfernte Ende besagten ersten flexiblen Seils (16) verbunden ist, und dabei eine Öffnung (22) für die Leine um hindurchzugehen, bildet; und
besagte zweite leinen-aufnehmenden Einrichtungen (40) ein leinen-aufnehmendes Element sind, das an das entfernte Ende besagten zweiten flexiblen Seils (34) verbunden ist, und dabei eine Öffnung (40) für die Leine um hindurchzugehen, bildet.

8. Die stoßdämpfende Vorrichtung nach irgendeinem vorhergehenden Anspruch, bei der:
es zwei Löcher durch besagtes erstes Anschlagelement (28) und zwei Löcher durch besagtes zweites Anschlagelement (46) gibt;
besagtes erstes flexibles Seils (16) zurück durch besagtes zweites Loch besagten ersten Anschlagelements (28) hindurchgeht und dadurch:
eine erste Aufnahmeschlaufe (18) außerhalb besagten Gehäuses (12) bildet;
eine erste Sicherungsschlaufe (20) innerhalb besagten Gehäuses (12) bildet; und
besagtes elastisches Glied (14) an besagte erste Sicherungsschlaufe (20) verbindet;
besagtes zweites flexibles Seil (34) zurück durch besagtes zweites Loch besagten zweiten Anschlagelements (46) hindurchgeht und dadurch:
eine zweite Aufnahmeschlaufe (36) außerhalb besagten Gehäuses (12) bildet;
eine zweite Sicherungsschlaufe (38) innerhalb besagten Gehäuses (12) bildet; und
besagtes elastisches Glied (14) an besagte zweite Sicherungsschlaufe (38) verbindet;
wodurch besagte erste und zweite Aufnahmeschlaufen (18, 36) besagte leinen-aufnehmenden Einrichtungen zum Integrieren besagter stoßdämpfender Vorrichtung (10) in die Leine (192) sind.

9. Die stoßdämpfende Vorrichtung nach irgendeinem vorhergehenden Anspruch, weiter aufweisend eine Rückhalteschlaufe (56), die durch besagte erste Sicherungsschlaufe (20) und durch besagte zweite Sicherungsschlaufe (38) hindurchgeht, um die Ausdehnung besagten elastischen Gliedes (14) zu begrenzen.

10. Die stoßdämpfende Vorrichtung nach irgendeinen vorhergehenden Anspruch, weiter aufweisend:
eine Begrenzungsröhre (194), die eine hohle flexible Röhre, die ungefähr und etwas kürzer als der Abstand zwischen besagten ersten leinen-aufnehmenden Einrichtungen (22) und besagten zweiten leinen-aufnehmenden Einrichtungen (40) ist, wenn besagtes elastisches Glied (14) beinahe vollständig ausgedehnt ist;
wodurch besagte Leine (192):
durch besagte erste leinen-aufnehmenden Einrichtungen (22) hindurchgeht; dann durch besagte Begrenzungsröhre (194) hindurch geht und dann
durch besagte zweite leinen-aufnehmende Einrichtungen (40) hindurchgeht;
und dadurch die Notwendigkeit zum Knüpfen von Knoten in besagter Leine (192), um besagte stoßdämpfende Vorrichtung (10) in besagte Leine (192) zu integrieren, beseitigt und auch eine vorbestimmte Menge an Spielraum in besagter Leine (192) zwischen besagten ersten leinen-aufnehmenden Einrichtungen (22) und besagten zweiten Leinenaufnehmenden Einrichtungen (40) schafft, um das Maß an Ausdehnung, das besagtes elastisches Glied (14) durchzuführen erlaubt wird, zu begrenzen.

11. Die stoßdämpfende Vorrichtung nach Anspruch 10, bei der:
das erste Ende besagter Begrenzungsröhre (194) unter ungefähr einem Winkel von 15-75 Grad abgeschnitten ist, um es besagter Begrenzungsröhre (194) zu erlauben, ungefähr flach auf besagten leinen-aufnehmenden Einrichtungen (22, 40) zu ruhen und
dadurch eine vorzuziehendere Oberfläche um besagte leinen-aufnehmende Einrichtungen (22, 40) zu ergreifen, schafft;
das zweite Ende besagter Begrenzungsröhre (194) unter ungefähr einem Winkel von 15-75 Grad abgeschnitten ist, um es besagter Begrenzungsröhre (194) zu erlauben, ungefähr flach auf besagten leinen-aufnehmenden Einrichtungen (22, 40) zu ruhen und
dadurch eine vorzuziehendere Oberfläche um besagte leinen-aufnehmende Einrichtungen (22, 40) zu ergreifen, schafft;
besagte erste Hülle (32) am entfernten Ende besagter erster leinen-aufnehmender Einrichtungen (22) einen erweiterten Teil hat, um eine vorzuziehendere Oberfläche zum Ruhen gegen besagtes erstes Ende besagter Begrenzungsröhre (194) zu schaffen; und
besagte zweite Hülle (50) am entfernten Ende besagter zweiter Leinen-aufnehmender Einrichtungen (40) einen erweiterten Teil hat, um eine vorzuziehendere Oberfläche zum Ruhen gegen besagtes zweites Ende besagter Begrenzungsröhre (194)zu schaffen.

## Revendications

1. Dispositif d'amortissement des chocs dans une élingue (10), comprenant un boîtier (12) muni d'au moins deux extrémités ; un élément élastique (14) étant situé dans ledit boîtier (12); le dispositif d'amortissement des chocs étant couplé à une élingue (192) par un moyen de réception d'élingue destiné à incorporer ledit dispositif d'amortissement des chocs dans l'élingue (192), **caractérisé par** :
un premier câble flexible (16) couplé à une première extrémité dudit élément élastique (14) et passant à l'extérieur dudit boîtier (12) ;
un deuxième câble flexible (34) couplé à une deuxième extrémité dudit élément élastique (14) et passant à l'extérieur dudit boîtier (12) ;
un premier moyen de réception d'élingue (22), situé à l'extrémité distale (18) dudit premier câble flexible (16) et à l'extérieur de la première extrémité dudit boîtier (12), destiné à incorporer la première extrémité dudit dispositif d'amortissement des chocs (10) dans ladite élingue (192) dans laquelle ledit dispositif d'amortissement des chocs est utilisé ;
un deuxième moyen de réception d'élingue (40), situé à l'extrémité distale (36) dudit deuxième câble flexible (34) et à l'extérieur de la deuxième extrémité dudit boîtier (12), destiné à incorporer la deuxième extrémité dudit dispositif d'amortissement des chocs (10) dans ladite élingue (192) dans laquelle ledit dispositif d'amortissement des chocs est utilisé ;
un premier élément d'arrêt (28) situé à ladite première extrémité dudit boîtier (12) définissant une ouverture pour que ledit premier câble flexible traverse ledit premier moyen de réception d'élingue (22) et empêche celui-ci d'être tiré dans ledit boîtier (12) par ledit élément élastique (14) ;
un deuxième élément d'arrêt (46) situé à ladite deuxième extrémité dudit boîtier (12) définissant une ouverture pour que ledit deuxième câble flexible traverse ledit deuxième moyen de réception d'élingue (40) et empêche celui-ci d'être tiré dans ledit boîtier (12) par ledit élément élastique (14) ;
ledit dispositif d'amortissement des chocs (10) étant couplé à ladite élingue (192) par ledit moyen de réception d'élingue (22, 40) de manière à incorporer ledit dispositif d'amortissement des chocs (10) dans l'élingue (192) pour munir l'élingue d'un amortissement des chocs.

2. Dispositif d'amortissement des chocs selon la revendication 1, dans lequel ledit élément d'arrêt (28, 46) situé à chaque extrémité dudit boîtier est un bonnet d'extrémité (26, 44).

3. Dispositif d'amortissement des chocs selon l'une quelconque des revendications précédentes, dans lequel ledit élément élastique (14) est un ressort.

4. Dispositif d'amortissement des chocs selon l'une quelconque des revendications précédentes, dans lequel :
ledit premier élément d'arrêt (28) comprend une première gaine (32) située autour dudit premier câble flexible (16) et à l'extérieur de ladite première extrémité dudit boîtier (12) ; et
ledit deuxième élément d'arrêt (46) comprend une deuxième gaine (50) située autour dudit deuxième câble flexible (34) et à l'extérieur de ladite deuxième extrémité dudit boîtier (12).

5. Dispositif d'amortissement des chocs selon la revendication 4, dans lequel :
ladite première gaine (32) entoure toute la partie (18) dudit premier câble flexible (16) qui est situé à l'extérieur dudit boîtier (12) ; et
ladite deuxième gaine (50) entoure toute la partie (36) dudit deuxième câble flexible (34) qui est situé à l'extérieur dudit boîtier (12).

6. Dispositif d'amortissement des chocs selon l'une quelconque des revendications précédentes, dans lequel :
ledit premier câble flexible (16) est fixé à lui-même à l'extérieur dudit boîtier (12) et audit premier élément d'arrêt (28) pour former ledit premier moyen de réception d'élingue (22) ; et
ledit deuxième câble flexible (34) est fixé à lui-même à l'extérieur dudit boîtier (12) et audit deuxième élément d'arrêt (46) pour former ledit deuxième moyen de réception d'élingue (40).

7. Dispositif d'amortissement des chocs selon l'une quelconque des revendications précédentes, dans lequel :
ledit premier moyen de réception d'élingue (22) est un élément de réception d'élingue couplé à l'extrémité distale dudit premier câble flexible (16) et définissant une ouverture (22) que peut traverser l'élingue ; et
ledit deuxième moyen de réception d'élingue (40) est un élément de réception d'élingue couplé à l'extrémité distale dudit deuxième câble flexible (34) et définissant une ouverture (40) que peut traverser l'élingue.

8. Dispositif d'amortissement des chocs selon l'une quelconque des revendications précédentes, dans lequel :
deux trous sont prévus à travers ledit premier élément d'arrêt (28) et deux trous à travers ledit deuxième élément d'arrêt (46) ;
ledit premier câble flexible (16) retraverse ledit deuxième trou dudit premier élément d'arrêt (28), ce qui permet :
de former une première boucle de réception (18) située à l'extérieur dudit boîtier (12) ;
de former une première boucle de sécurité (20) située à l'intérieur dudit boîtier (12) ; et
de coupler ledit élément élastique (14) à ladite première boucle de sécurité (20) ;
ledit deuxième câble flexible (34) retraverse ledit deuxième trou dudit deuxième élément d'arrêt (46), ce qui permet :
de former une deuxième boucle de réception (38) située à l'extérieur dudit boîtier (12) ;
de former une deuxième boucle de sécurité (38) située à l'intérieur dudit boîtier (12) ; et
de coupler ledit élément élastique (14) à ladite deuxième boucle de sécurité (38) ;
ladite première boucle de réception (18) et ladite deuxième boucle de réception (36) forment ledit moyen de réception d'élingue destiné à incorporer ledit dispositif d'amortissement des chocs (10) dans l'élingue (192).

9. Dispositif d'amortissement des chocs selon l'une quelconque des revendications précédentes, comprenant en outre une boucle de retenue (56) qui traverse ladite première boucle de sécurité (20) et ladite deuxième boucle de sécurité (38) pour limiter l'extension dudit élément élastique (14).

10. Dispositif d'amortissement des chocs selon l'une quelconque des revendications précédentes, comprenant en outre :
un tube de restriction (194) comprenant un tube flexible creux environ légèrement plus court que la distance séparant ledit premier moyen de réception d'élingue (22) et ledit deuxième moyen de réception d'élingue (40) lorsque ledit élément élastique (14) est environ complètement tendu ;
et dans lequel ladite élingue (192) :
traverse ledit premier moyen de réception d'élingue (22) ; traverse ensuite ledit tube de restriction (194) et traverse ensuite ledit deuxième moyen de réception d'élingue (40) ;
ce qui permet de ne pas devoir nouer des noeuds dans ladite élingue (192) pour incorporer ledit dispositif d'amortissement des chocs (10) dans ladite élingue (192) et de fournir également un niveau prédéterminé de mou dans ladite élingue (192) entre ledit premier moyen de réception d'élingue (22) et ledit deuxième moyen de réception d'élingue (40) pour limiter le niveau d'extension permis audit élément élastique (14).

11. Dispositif d'amortissement des chocs selon la revendication 10, dans lequel :
la première extrémité dudit tube de restriction (194) est coupée en oblique d'environ 15 à 75 degrés pour permettre audit tube de restriction (194) de reposer environ à plat contre lesdits moyens de réception d'élingue (22, 40), ce qui permet de fournir une surface plus préférable pour fixer lesdits moyens de réception d'élingue (22, 40) ;
la deuxième extrémité dudit tube de restriction (194) est coupée en oblique d'environ 15 à 75 degrés pour permettre audit tube de restriction (194) de reposer environ à plat contre lesdits moyens de réception d'élingue (22, 40), ce qui permet de fournir une surface plus préférable pour fixer lesdits moyens de réception d'élingue (22, 40) ;
ladite première gaine (32) présente une partie allongée située à l'extrémité distale dudit premier moyen de réception d'élingue (22) pour fournir une surface plus préférable destinée à reposer contre ladite première extrémité dudit tube de restriction (194) ; et
ladite deuxième gaine (50) présente une partie allongée située à l'extrémité distale dudit deuxième moyen de réception d'élingue (40) pour fournir une surface plus préférable destinée à reposer contre ladite deuxième extrémité dudit tube de restriction (194).
